# EUROPÄISCHE PATENTSCHRIFT

(11) **EP 3 792 081 B1**
(45) Veröffentlichungstag und Bekanntmachung des Hinweises auf die Patenterteilung: **01.03.2023**
(21) Anmeldenummer: 20192469.3
(22) Anmeldetag: 24.08.2020
(51) Int. Cl.: B60C 11/03

(54) **FAHRZEUGLUFTREIFEN**
PNEUMATIC TYRE
PNEUMATIQUE DE VÉHICULE

(30) Priorität: 12.09.2019 DE 102019213934
(43) Veröffentlichungstag der Anmeldung: 17.03.2021
(73) Patentinhaber: Continental Reifen Deutschland GmbH, 30165 Hannover (DE)
(72) Erfinder: RITTWEGER, Stefan, 30419 Hannover (DE); TOMFORDE, Willem, 30419 Hannover (DE)
(74) Vertreter: Continental Corporation

(56) Entgegenhaltungen:
- EP-A1- 3 594 023
- EP-A2- 2 907 675
- WO-A1-2016/055173
- DE-A1-102017 222 341

## Beschreibung

Die Erfindung betrifft einen Fahrzeugluftreifen mit einem Laufstreifen mit zumindest einer zumindest einseitig von einer Umfangsrille begrenzten, an dieser eine Rippenflanke und eine in der Laufstreifenperipherie liegende Rippenaußenseite aufweisenden Profilrippe, welche mit einer Vielzahl von der Umfangsrille ausgehenden zur Laufstreifenperiphere offenen, seichter als die Umfangsrille ausgeführten Einkerbungen versehen ist, welche jeweils einen Boden und an ihrer Außenseite Einkerbungskanten aufweisen.

Ein Fahrzeugluftreifen der eingangs genannten Art ist beispielsweise aus der EP 0 855 291 A2 bekannt. Der Fahrzeugluftreifen weist einen Laufstreifen mit drei durch Umfangsrillen voneinander getrennten, mittleren Profilrippen auf, die durch Querrillen, blockartig strukturiert sind. In den blockartigen Strukturen der Profilrippe sind von der Umfangsrille ausgehende, zur Laufstreifenperipherie offene, seichter als die Umfangsrille ausgeführte, sacknutartige Einkerbungen ausgebildet, welche jeweils einen zur Umfangsrille abfallenden Boden aufweisen. Die Einkerbungen sollen ein ungleichmäßiges Abreiben des Laufstreifens, insbesondere ein Auftreten des sogenannten "Sägezahneffektes", verhindern.

Die EP 2907 675 A2, EP 3 594 023 41, WO 2016/055173 A1 und DE 102017 222341 A1 offenbaren bekannte Fahrzeugreifen mit speziell ausgebildeten Reifenprofilen.

Der Erfindung liegt die Aufgabe zu Grunde, bei einem Fahrzeugluftreifen der eingangs genannten Art die Handling- und die Aquaplaningeigenschaften zu verbessern.

Gelöst wird die gestellte Aufgabe durch die Merkmale von Anspruch 1.

Die Erfindung kennzeichnet sich daher durch Einkerbungen mit speziell gerundeten, sich verdrehenden, fasenartigen Schrägflächen an einer Übergangsrundung einer Rippenflanke.

Die Schrägflächen stabilisieren die Profilrippe im Bereich der Einkerbungen und sorgen derart für eine verbesserte Krafteinleitung in die Profilrippe, insbesondere unter schräger bis lateraler Belastung (Seitenführungskräfte), was für die Handlingeigenschaften von Vorteil ist. Ferner bleibt mit fortschreitendem Laufstreifenabrieb ein verhältnismäßig großes Volumen der Einkerbungen erhalten, sodass die Einkerbungen beim Fahren auf nasser Fahrbahn die Entwässerung der Profilrippe zur Umfangsrille begünstigen und daher auch im Hinblick auf das Aquaplaningverhalten von Vorteil sind.

Gemäß einer bevorzugten Ausführung weisen die über die Übergangsrundung hinausverlaufenden Einkerbungskanten auf der Übergangsrundung bogenartig gekrümmte Kantenabschnitte auf, die gebogene Schrägfläche weist im Inneren der Einkerbung eine zur Umfangsrille beabstandete, zumindest über einen Kantenabschnitt bogenartig gekrümmte innere Begrenzungskante auf, dessen bzw. deren Krümmungsrichtung jener der bogenartig gekrümmten Kantenabschnitte der über die Übergangsrundung hinausverlaufenden Einkerbungskanten entspricht und welcher bzw. welche gegenüber diesen Kantenabschnitten stärker gekrümmt ist. Den gedrehten fasenartigen Schrägflächen liegen daher für eine stabilisierende Wirkung vorteilhafte unterschiedlich stark gekrümmte, diese begrenzende Kantenabschnitte zugrunde.

Ferner ist es bevorzugt, wenn die zwei über die Übergangsrundung hinausverlaufenden Einkerbungskanten parallel zueinander verlaufen.

Gemäß einer weiteren bevorzugten Ausführung beträgt der Winkel, unter welchem die Schrägfläche am Boden der Einkerbung zur Umfangsrichtung orientiert ist, 65° bis 75°. Bei einem solchen Winkel bleibt mit fortschreitendem Laufstreifenabrieb ein relativ großes Volumen der Einkerbung erhalten.

Für die Wirkungsweise der Einkerbungen ist es ferner von Vorteil, wenn sich der Boden der Einkerbungen in einer in radialer Richtung ermittelten konstanten Tiefe von 60% bis 80% der Profiltiefe befindet.

Gemäß einer weiteren bevorzugten Ausführung verlaufen die gekrümmten Kantenabschnitte der über die Übergangsrundung hinausverlaufenden Einkerbungskanten, betrachtet in einer die jeweilige Einkerbungskante enthaltenden Querschnittebene, entlang eines Radius von 1,5 mm bis 2,5 mm. Ferner ist es günstig, wenn die gekrümmte innere Begrenzungskante der Schrägfläche, betrachtet in einer die innere Begrenzungskante enthaltenden Querschnittebene, entlang eines Radius von 0,5 mm bis 1,0 mm verläuft. Der Verdrehung der erwähnten, gebogenen, sich verdrehenden Schrägfläche liegen daher insbesondere entsprechend aufeinander abgestimmte Radien zugrunde. Die bevorzugten Radien haben sich im Hinblick auf die ebenfalls bereits erwähnte stabilisierende Wirkung der Schrägfläche als besonders vorteilhaft erwiesen.

Die Handling- und die Aquaplaningeigenschaften des Reifens lassen sich mit Hilfe der Einkerbungen besonders gut verbessern, wenn die Breite der gebogenen Schrägfläche auf die Breite der Einkerbung abgestimmt ist. Besonders vorteilhaft ist es dabei, wenn die gebogene Schrägfläche eine in die Laufstreifenperipherie projizierte Breite aufweist, welche 50% bis 70%, insbesondere 53% bis 67%, einer zwischen den über die Übergangsrundung hinausverlaufenden Einkerbungskanten als Minimalabstand ermittelten Breite der Einkerbung beträgt.

In diesem Zusammenhang ist es ferner vorteilhaft, wenn die Einkerbung eine zwischen den über die Übergangsrundung hinausverlaufenden Einkerbungskanten als Minimalabstand ermittelte Breite von 4,0 mm bis 7,0 mm aufweist.

Bei Fahrzeugluftreifen mit einem Laufstreifen mit einer Profilrippe, deren Einkerbungen aufweisende Rippenflanke eine radial innere Übergangsrundung zum Rillengrund der jeweiligen Umfangsrille aufweist, ist es für die Dauerhaltbarkeit der Einkerbung günstig, wenn der Boden der Einkerbung an der Umfangsrille, im Querschnitt der Umfangsrille betrachtet, am Niveau des radial äußeren Endes der Übergangsrundung liegt oder radial außerhalb dieses Niveaus liegt.

Gemäß einer weiteren bevorzugten Ausführungsform sind Einkerbungen vorgesehen, welche lokale Einkerbungen sind, die sich gegenüber dem radial äußeren Ende der Übergangsrundung der Rippenflanke in axialer Richtung höchstens 10,0 mm in die Profilrippe hineinerstrecken.

Besonders günstig ist es, wenn die lokalen Einkerbungen in einer schulterseitigen Profilrippe ausgebildet sind. Insbesondere in schulterseitigen Profilrippen sind stabilisierende Maßnahmen für gute Handlingeigenschaften vorteilhaft.

Gemäß einer weiteren bevorzugten Ausführungsform sind Einkerbungen vorgesehen, welche Teil eines in der Profilrippe ausgebildeten Einschnittes oder einer in der Profilrippe ausgebildeten Rille sind, wobei die zwei über die Übergangsrundung hinausverlaufenden Einkerbungskanten in Fortsetzung der Rillen- bzw. Einschnittkanten verlaufen. Solche Einkerbungen wirken vor allem auf eine im Hinblick auf die Entwässerungswirkung der Einschnitte und der Rillen vorteilhaften Weise mit diesen zusammen.

Einkerbungen, welche Teil eines Einschnittes bzw. einer Rille sind, sind bevorzugter Weise in einer mittleren Profilrippe ausgebildet.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf eine schulterseitige Profilrippe eines Laufstreifens eines Fahrzeugluftreifens mit einer ersten Ausführungsvariante der Erfindung,
Fig. 2 einen vergrößerten Schnitt entlang der Linie II-II der Fig. 1,
Fig. 3 eine vergrößerte Schrägansicht gemäß der in Fig. 1 durch den Pfeil S₃ angedeuteten Sichtrichtung,
Fig. 4 einen Schnitt entlang der Linie IV-IV der Fig. 3,
Fig. 5 einen Schnitt entlang der Linie V-V der Fig. 3,
Fig. 6 eine Draufsicht auf eine mittlere Profilrippe eines Laufstreifens eines Fahrzeugluftreifens mit einer zweiten Ausführungsvariante der Erfindung,
Fig. 7 einen vergrößerten Schnitt entlang der Linie VII-VII der Fig. 6,
Fig. 8 einen vergrößerten Schnitt entlang der Linie VIII-VIII der Fig. 6 und
Fig. 9 eine vergrößerte Schrägansicht gemäß der in Fig. 6 durch den Pfeil S₉ angedeuteten Sichtrichtung.

Gemäß der Erfindung ausgeführte Fahrzeugluftreifen sind insbesondere Reifen in Radialbauart für Personenkraftwagen, Vans oder Light-Trucks.

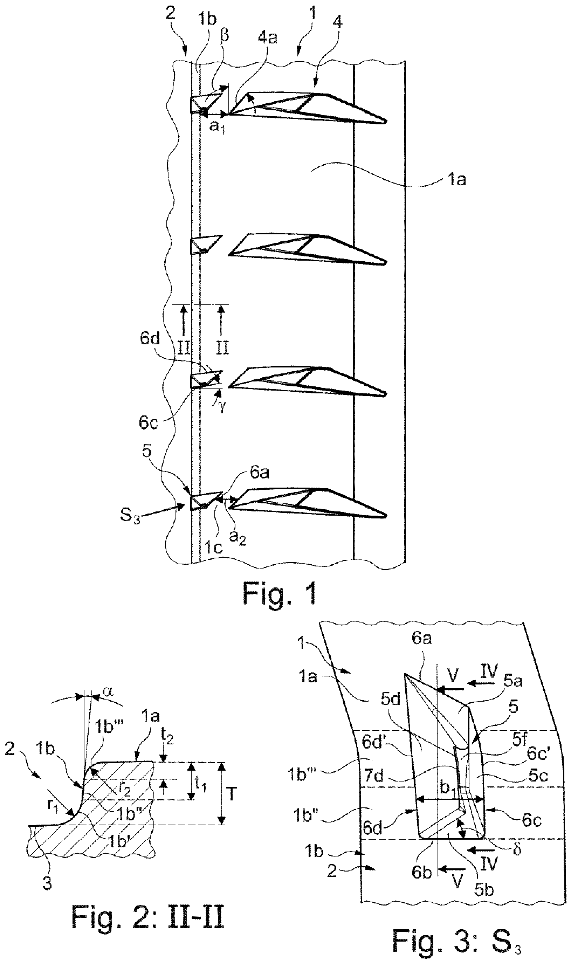

Fig. 1 zeigt eine Draufsicht auf einen Umfangsabschnitt einer schulterseitigen Profilrippe 1 eines Laufstreifens eines Fahrzeugluftreifens, welche laufstreifeninnenseitig von einer gerade verlaufenden, schulterseitigen Umfangsrille 2 begrenzt ist. Die schulterseitige Umfangsrille 2 ist auf die für den jeweiligen Reifentyp vorgesehene Profiltiefe T von üblicherweise 6,5 mm bis 9,0 mm ausgeführt und weist einen in der Profiltiefe T verlaufenden Rillengrund 3 auf (Fig. 2).

Die Profilrippe 1 weist ferner eine in der Laufstreifenperipherie liegende Rippenaußenseite 1a und an der Umfangsrille 2 eine zwischen dem Rillengrund 3 und der Rippenaußenseite 1a verlaufende, in Umfangsrichtung umlaufende Rippenflanke 1b auf (Fig. 2). Gemäß Fig. 2 ist die Rippenflanke 1b, im Querschnitt der Umfangsrille 2 betrachtet, langgezogen S-förmig ausgeführt, schließt knickfrei an den Rillengrund 3 sowie an die Rippenaußenseite 1a an und setzt sich in radialer Richtung aus einer radial inneren Übergangsrundung 1b', einem mittleren Flankenabschnitt 1b" und einer eine scharfe Rillenkante ersetzenden radial äußeren Übergangsrundung 1b‴ zusammen. Die radial innere Übergangsrundung 1b' verläuft, im Querschnitt der Umfangsrille 2 betrachtet, entlang eines Radius r₁ von beispielsweise 3,0 mm. Der mittleren Flankenabschnitt 1b" schließt in einer in radialer Richtung ermittelten Tiefe ti von 60% bis 80% der Profiltiefe T knickfrei an die Übergangsrundung 1b' an und verläuft zur radialen Richtung unter einem Winkel α von 0° bis 7°, insbesondere von 3° bis 6°. Die radial äußere Übergangsrundung 1b‴ schließt in radialer Richtung in einer Tiefe t₂ von 20% bis 40%, insbesondere von bis zu 35%, der Profiltiefe T knickfrei an den mittleren Flankenabschnitt 1b" an und ist entlang eines Radius r₂ von vorzugsweise 1,5 mm bis 2,5 mm, beispielsweise von 2,0 mm, gerundet.

Wie Fig. 1 ferner zeigt, ist die schulterseitige Profilrippe 1 mit einer Anzahl von Querrillen 4 versehen, welche lediglich schematisch dargestellt sind und vor dem radial äußeren Ende der radial äußeren Übergangsrundung 1b‴ der Rippenflanke 1b (vergleiche Fig. 2) in einem in axialer Richtung ermittelten Abstand a₁ von 5,0 mm bis 10,0 mm enden. Beim gezeigten Ausführungsbeispiel enden die Querrillen 4 laufstreifeninnenseitig an einer an der Rippenaußenseite 1a ausgebildeten endseitigen Rillenkante 4a, welche in Draufsicht zur Umfangsrichtung unter einem Winkel β von 40° bis 50° orientiert ist.

Axial seitlich jeder Querrille 4 ist jeweils eine von der Umfangsrille 2 ausgehende, in die Profilrippe 1 hineinragende, zur Laufstreifenperipherie offene, sacknutartige Einkerbung 5 ausgebildet, wobei zwischen jeder Einkerbung 5 und ihrer benachbarten Querrille 4 ein Profilrippensteg 1c verbleibt. Die Einkerbungen 5 befinden sich daher, wie noch genauer erläutert wird, jeweils im Bereich der radial äußeren Übergangsrundung 1b‴ der Rippenflanke 1b (Fig. 3). Die weitere Ausgestaltung der Einkerbungen 5 wird nachfolgend anhand einer einzelnen Einkerbung 5 erläutert.

Wie Fig. 3 bis Fig. 5 insbesondere in Kombination miteinander zeigen, überragt die Einkerbung 5 die radial äußere Übergangsrundung 1b‴ beidseitig, ragt daher radial innerhalb der Übergangsrundung 1b‴ in den Bereich des mittleren Flankenabschnittes 1b" und radial außerhalb der Übergangsrundung 1b‴ bis in den Bereich der Rippenaußenseite 1a. Gemäß Fig. 3 ist die Einkerbung 5 an ihrer am äußeren Niveau der Profilrippe 1 liegenden Außenseite durch eine an der Rippenaußenseite 1a befindliche, radial äußere Einkerbungskante 6a, eine an der Rippenflanke 1b befindliche, radial innere Einkerbungskante 6b sowie durch beidseitig über die radial äußere Übergangsrundung 1b‴ hinausverlaufende Einkerbungskanten 6c, 6d begrenzt. Das äußere Niveau der Profilrippe 1 entspricht dabei den kombinierten Niveaus der Rippenaußenseite 1a und der Rippenflanke 1b.

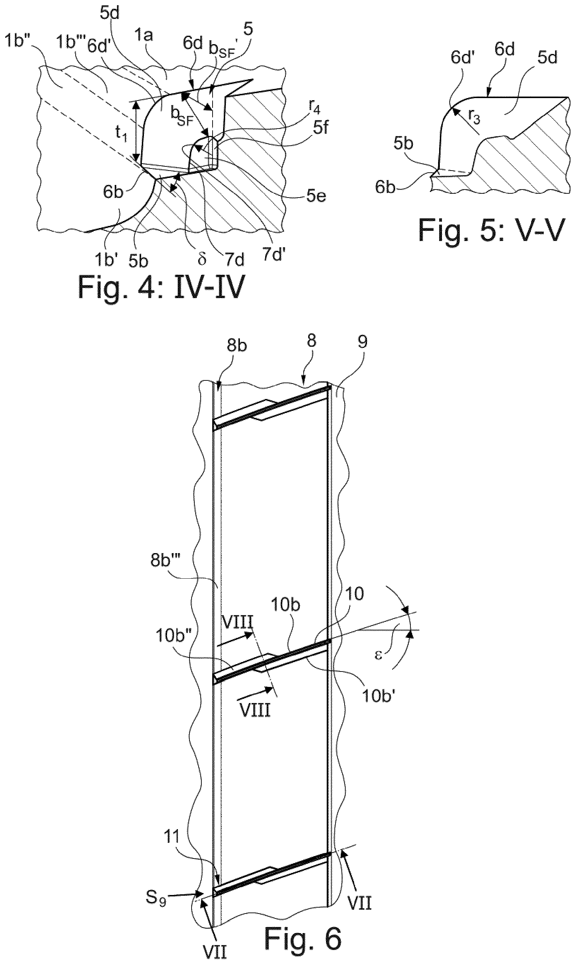

Gemäß Fig. 1 verläuft die radial äußere Einkerbungskante 6a parallel zur bereits erwähnten Endkante 4a der jeweils axial benachbarten Querrille 4 und daher unter dem bereits erwähnten Winkel β, wobei sie zur jeweiligen Endkante 4a in axialer Richtung einen Abstand a₂ von 3,0 mm bis 5,0 mm aufweist, welcher gleichzeitig der Breite der ebenfalls bereits erwähnten Profilrippenstege 1c entspricht. Gemäß Fig. 4 verläuft die an der Rippenflanke 1b liegende, radial innere Einkerbungskante 6b in der bereits erwähnten Tiefe ti (vergleiche Fig. 2), sie liegt daher am radial äußeren Ende der radial inneren Übergangsrundung 1b'. Wie Fig. 3 ferner zeigt, erstrecken sich die über die radial äußere Übergangsrundung 1b‴ verlaufenden Einkerbungskanten 6c, 6d parallel zueinander sowie jeweils zwischen den Enden der Einkerbungskanten 6a, 6b, wobei die Einkerbungskante 6d - bedingt durch die erläuterte Neigung der radial äußere Einkerbungskante 6a (Winkel (3, Fig. 1) - länger ist als die Einkerbungskante 6c. Die Einkerbungskanten 6c, 6d verlaufen an der Rippenaußenseite 1a zur axialen Richtung unter einem Winkel γ von 0° bis 5° (Fig. 1), am mittleren Flankenabschnitt 1b" in radialer Richtung oder zu dieser unter einem auf den erwähnten Winkel γ abgestimmten Winkel von insbesondere bis zu 2° und weisen jeweils einen über die Übergangsrundung 1b‴ verlaufenden, gekrümmten Kantenabschnitt 6c`, 6d` auf. Die gekrümmten Kantenabschnitte 6c`, 6d` jeweils weisen eine mit der Übergangsrundung 1b‴ übereinstimmende Krümmungsrichtung auf und verlaufen, in einer in radialer Richtung ausgerichteten, die jeweilige Einkerbungskante 6c, 6d enthaltenden Querschnittebene betrachtet, jeweils entlang eines Radius r₃ (Fig. 5, gezeigt für den Kantenabschnitt 6d'), welcher 1,5 mm bis 2,5 mm beträgt, wobei der Radius r₃ bei einem Winkel γ (Fig. 1) von 0° mit dem erwähnten Radis r₂ der radial äußeren Übergangsrundung 1b‴ (Fig. 2) übereinstimmt und bei einem von 0° abweichenden Winkel γ geringfügig größer ist als der Radius r₂.

Gemäß Fig. 3 weist die Einkerbung 5 eine zwischen den über die radial äußeren Übergangsrundung 1b‴ verlaufenden Einkerbungskanten 6c, 6d als Minimalabstand ermittelte Breite b₁ von 4,0 mm bis 7,0 mm auf.

Wie Fig. 3 bis Fig. 5 ferner zeigen, ist die Einkerbung 5 von einer Endflanke 5a (Fig. 3), einer Plateaufläche 5b, einer Seitenfläche 5c (Fig. 3), einer nach außen gebogenen Schrägfläche 5d und durch im Inneren der Einkerbung 5 ausgebildete Stützflächen 5e, 5f (Fig. 3, Fig. 4) begrenzt.

Die Plateaufläche 5b befindet sich am Niveau der bereits erwähnten Tiefe ti (Fig. 4), geht von der radial inneren Einkerbungskante 6b aus und bildet den Boden der Einkerbung 5. Gemäß Fig. 3 geht die Seitenfläche 5c von der über die radial äußere Übergangsrundung 1b‴ verlaufenden, kürzeren Einkerbungskante 6c aus, endet in radialer Richtung an der Plateaufläche 5b und verläuft in radialer Richtung oder zu dieser unter einem Winkel von insbesondere bis zu 2°.

Gemäß Fig. 3 und Fig. 4 erstreckt sich die gebogene Schrägfläche 5d über die gesamte Länge der über die radial äußere Übergangsrundung 1b‴ verlaufenden, längeren Einkerbungskante 6d, verläuft zur Plateaufläche 5b und weist eine im Inneren der Einkerbung 5 befindliche, ebenfalls zur Plateaufläche 5b verlaufende, zur Umfangsrille 2 beabstandete, innere Begrenzungskante 7d auf. Wie Fig. 4 zeigt, weist die innere Begrenzungskante 7d einen mittleren kreisbogenförmig gekrümmten Kantenabschnitt 7d` auf, dessen Krümmungsrichtung mit jener der über die Übergangsrundung 1 b'" verlaufenden, gekrümmten Kantenabschnitte 6c`, 6d` der Einkerbungskanten 6c, 6d übereinstimmt und welcher entlang eines Radius r₄ von 0,5 mm bis 1,0 mm verläuft. Die Krümmung des Kantenabschnittes 7d` ist daher größer als jene der Kantenabschnitte 6c`, 6d`, welche entlang des erwähnte Radius r₃ verlaufen, wobei die Krümmung bekannter Weise dem Kehrwert jenes Radius entspricht, welcher dem Krümmungsverlauf am besten angenähert ist. Die gebogene Schrägfläche 5d weist eine zwischen der sie mitbegrenzenden Einkerbungskante 6d und ihrer inneren Begrenzungskante 7d als gegenseitiger lichter Abstand ermittelte konstante Breite b_{SF} (Fig. 4) und eine mit dieser korrespondierenden in die Laufstreifenperipherie projizierte Breite b_{SF}' (Fig. 4) auf, welche 50% bis 70%, insbesondere 53% bis 67%, der Breite b₁ (Fig. 3) der Einkerbung 5 entspricht. Da die Krümmung des kreisbogenförmig gekrümmten Kantenabschnittes 7d` der innere Begrenzungskante 7d größer ist als jene des kreisbogenförmig gekrümmten Kantenabschnittes 6d` der Einkerbungskante 6d, verdreht sich die gebogene Schrägfläche 5d über die Erstreckung des Kantenabschnittes 7d` derart, dass sie am Niveau der Plateaufläche 5b zur Umfangsrichtung bzw. zur in Umfangsrichtung orientierten, radial inneren Einkerbungskante 6b unter einem Winkel δ von 40° bis 80°, insbesondere von 65° bis 75°, verläuft.

Gemäß Fig. 4 verläuft die Stützfläche 5e zwischen der inneren Begrenzungskante 7d der gebogenen Schrägfläche 5d und der Plateaufläche 5b, ist beim gezeigten Ausführungsbeispiel parallel zur Seitenfläche 5c (Fig. 3) ausgerichtet und endet am der Umfangsrille 2 abgewandten Ende der inneren Begrenzungskante 7d an der bereits erwähnten Stützfläche 5f. Gemäß Fig. 3 ist die Stützfläche 5f im Wesentlichen rechteckig und erstreckt sich zwischen der Seitenfläche 5c und der Stützfläche 5e (vergleiche Fig. 4).

Die Seitenfläche 5c überragt die Stützflächen 5e, 5f in radialer Richtung. Die bereits erwähnte Endflanke 5a ist eine dreieckige Fläche, welche von der ebenfalls bereits erwähnten radial äußeren Einkerbungskante 6a ausgeht, in radialer Richtung verläuft oder zu dieser unter einem Winkel von bis zu 5° geneigt ist, radial außerhalb der Stützfläche 5f an den diese überragenden Bereich der Seitenfläche 5c anschließt und gemeinsam mit der gebogenen Schrägfläche 5d am gegenseitigen Anschluss der Einkerbungskante 6d und der radial äußeren Einkerbungskante 6a ausläuft.

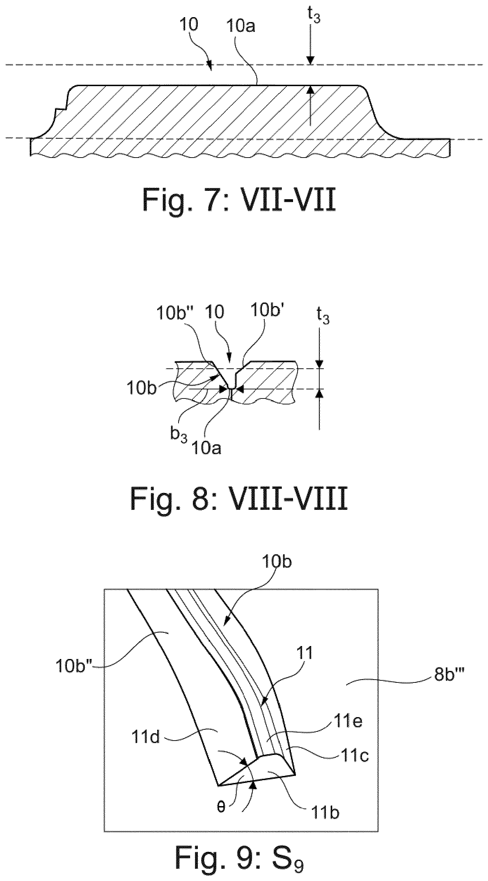

Fig. 6 zeigt eine mittlere Profilrippe 8 mit einer weitere Ausführungsvariante der Erfindung. Die mittlere Profilrippe 8 ist beidseitig von Umfangsrillen 9 begrenzt, weist an diesen Rippenflanken 8b auf, wobei die in Fig. 6 linke Rippenflanke 8b übereinstimmend zur bereits beschriebenen Rippenflanke 1b (Fig. 1) ausgeführt ist und eine entsprechend gestaltete, radial äußere Übergangsrundung 8b‴ (Fig. 9) aufweist. Die Profilrippe 8 ist mit einer Anzahl von seichten Einschnitten 10 versehen, welche in Draufsicht zur axialen Richtung unter einem Winkel ε von 5° bis 20° die Profilrippe 8 durchqueren und jeweils einen Einschnittgrund 10a sowie zwei Einschnittwände 10b aufweisen (Fig. 8). Gemäß Fig. 8 ist der Einschnittgrund 10a, im Querschnitt des Einschnittes 10 betrachtet, U-förmig und verläuft - bezogen auf seinen tiefsten Punkt - in radialer Richtung in einer konstanten Tiefe t₃ (Fig. 7) von 1,0 mm bis 2,0 mm und weist eine Breite b₃ von 0,4 mm bis 1,0 mm auf. Gemäß Fig. 6 ist die eine Einschnittwand 10b abschnittsweise mit einer zu der in Fig. 6 rechten Rippenflanke 8b verlaufenden Fase 10b' versehen, welche beispielsweise eine in bekannter Weise ausgeführte Schrägfläche ist (Fig. 8). Die andere Einschnittwand 10b ist abschnittsweise mit einer Fase 10b" versehen, welche zu der in Fig. 6 linken Rippenflanke 8b verläuft, unmittelbar an den Einschnittgrund 10a anschließt (Fig. 8) und eine im Bereich der radial äußeren Übergangsrundung 8b‴ ausgebildete Einkerbung 11 mitbegrenzt (siehe auch Fig. 9). Die in Fig. 6 an der linken Umfangsrille 9 liegenden Enden der Einschnitte 10 sind daher jeweils als Einkerbung 11 ausgeführt.

Die Einkerbung 11 ist im Wesentlichen analog zur bereits erläuterten Einkerbung 5 des ersten Ausführungsbeispiel (Fig. 1 bis Fig. 5) gestaltet, sodass nachfolgend insbesondere auf die Unterschiede gegenüber der Einkerbung 5 eingegangen wird. Wie Fig. 9 zeigt, ist die Einkerbung 11 durch eine Plateaufläche 11b, eine Seitenfläche 11c, eine gebogene Schrägfläche 11d und eine im Inneren der Einkerbung ausgebildete Auslauffläche 11e begrenzt. Die Seitenfläche 11c verläuft in Fortführung der entsprechenden Einschnittwand 10b und endet an der Plateaufläche 11b. Die gebogene Schrägfläche 11d verdreht sich zumindest derart abschnittsweise über ihre Erstreckung, dass sie am Niveau der Plateaufläche 11b zur Umfangsrichtung unter einem Winkel θ von 40° bis 80°, insbesondere von 65° bis 75°, verläuft. Die Schrägfläche 11d ist dabei analog zur bereits beschriebenen Schrägfläche 5d (erstes Ausführungsbeispiel, siehe Fig. 1 bis Fig. 5) durch abschnittsweise unterschiedlich stark gekrümmte Kantenabschnitte von Einkerbungskanten mitbegrenzt, wobei diese zwei Einkerbungskanten in Fortsetzung der Rillenkanten der Querrille verlaufen.

Die Erfindung ist nicht auf die beschriebenen Ausführungsvarianten beschränkt, sondern durch die Ansprüche. Insbesondere kann die Plateaufläche der Einkerbung auch radial außerhalb des radial äußeren Endes einer etwaig vorgesehenen radial inneren Übergangsrundung der Rippenflanke ausgebildet sein und zu dieser in radialer Richtung vorzugsweise einen Abstand von bis zu 2,0 mm aufweisen. Ferner kann die innere Begrenzungskante der Einkerbungen auch durchgehend gekrümmt sein.

Darüber hinaus können die Profilrippen auch mit Querrillen versehen sein, welche zumindest einseitig in eine Umfangsrille einmünden und die Profilrippe blockartig strukturieren, wobei die erfindungsgemäßen Einkerbungen an den entsprechenden Enden solcher Querrillen ausgebildet sein können. Die Einkerbungskanten, welche gemäß den Ausführungsbeispielen abschnittsweise entlang eines Radius verlaufen, können auch auf eine von der Kreisbogenform abweichende Weise einheitlich, also frei von Wendepunkten, gekrümmt sein. Die entsprechenden Einkerbungskanten sind daher bogenartig, insbesondere kreisbogenförmig, gekrümmt.

### Bezugsziffernliste

- 1: schulterseitige Profilrippe
- 1a: Rippenaußenseite
- 1b: Rippenflanke
- 1b': radial innere Übergangsrundung
- 1b": mittlerer Flankenabschnitt
- 1b‴: radial äußere Übergangsrundung
- 1c: Profilrippensteg
- 2: schulterseitige Umfangsrille
- 3: Rillengrund
- 4: Querrille
- 4a: endseitige Rillenkante
- 5: Einkerbung
- 5a: Endflanke
- 5b: Plateaufläche
- 5c: Seitenfläche
- 5d: Schrägfläche
- 5e: Stützfläche
- 5f: Stützfläche
- 6a: radial äußere Einkerbungskante
- 6b: radial innere Einkerbungskante
- 6c: Einkerbungskante
- 6c': gekrümmter Kantenabschnitt
- 6d: Einkerbungskante
- 6d': gekrümmter Kantenabschnitt
- 7d: innere Begrenzungskante
- 7d': gekrümmter Kantenabschnitt
- 8: mittlere Profilrippe
- 8b: Rippenflanke
- 8b‴: radial äußere Übergangsrundung
- 9: Umfangsrille
- 10: Einschnitt
- 10a: Einschnittgrund
- 10b: Einschnittwand
- 10b', 10b": Fase
- 11: Einkerbung
- 11b: Plateaufläche
- 11c: Seitenfläche
- 11d: Schrägfläche
- 11e: Auslauffläche
- a₁, a₂: Abstand
- b₁, b₃, b_{SF}, b_{SF}': Breite
- S₃, S₉: Pfeil (Sichtrichtung)
- t₁, t₂, t₃: Tiefe
- T: Profiltiefe
- r₁, r₂, r₃, r₄: Radius
- α, β, γ, δ, ε, θ: Winkel

## Patentansprüche

1. Fahrzeugluftreifen mit einem Laufstreifen mit zumindest einer zumindest einseitig von einer Umfangsrille (2, 9) begrenzten, an dieser eine Rippenflanke (1b, 8b) und eine in der Laufstreifenperipherie liegende Rippenaußenseite (1a) aufweisenden Profilrippe (1, 8), welche mit einer Vielzahl von von der Umfangsrille (2, 9) ausgehenden zur Laufstreifenperiphere offenen, seichter als die Umfangsrille (2, 9) ausgeführten Einkerbungen (5, 11) versehen ist, welche jeweils einen Boden (5b, 11b) und an ihrer Außenseite Einkerbungskanten (6a, 6b, 6c, 6d) aufweisen,
**dadurch gekennzeichnet,**
**dass** die Rippenflanke (1b, 8b) zur Rippenaußenseite (1a) eine zur axialen Richtung der Rippenflanke ausgebildete Übergangsrundung (1b‴, 8b‴) aufweist, an welcher die Einkerbungen (5, 11) ausgebildet sind, wobei jeweils zwei Einkerbungskanten (6c, 6d) jeder Einkerbung (5, 11) über die Übergangsrundung (1b‴, 8b‴) hinausverlaufen und
wobei von einer dieser Einkerbungskanten (6d) eine zum Boden (5b, 11b) der Einkerbung (5, 11) verlaufende, nach außen gebogene konvexe Schrägfläche (5d, 11d) ausgeht, welche sich derart relativ zur Umfangsrichtung verdreht, dass sie am Boden (5b, 11b) der Einkerbung (5, 11) zur Umfangsrichtung unter einem Winkel (δ, θ) von 40° bis 80° orientiert ist.

2. Fahrzeugluftreifen nach Anspruch 1, **dadurch gekennzeichnet, dass** die über die Übergangsrundung (1b‴, 8b" `) hinausverlaufenden Einkerbungskanten (6c, 6d) auf der Übergangsrundung (1b‴,8b‴) bogenartig gekrümmte Kantenabschnitte (6c', 6d') aufweisen und dass die gebogene Schrägfläche (5d, 11d) im Inneren der Einkerbung (5, 11) eine zur Umfangsrille (2, 9) beabstandete, zumindest über einen Kantenabschnitt (7d') bogenartig gekrümmte innere Begrenzungskante (7d) aufweist, dessen bzw. deren Krümmungsrichtung jener der bogenartig gekrümmten Kantenabschnitte (6c', 6d') der über die Übergangsrundung (1b‴, 8b‴) hinausverlaufenden Einkerbungskanten (6c, 6d) entspricht und welcher bzw. welche gegenüber diesen Kantenabschnitten (6c', 6d') stärker gekrümmt ist.

3. Fahrzeugluftreifen nach Anspruch 1 oder 2, **dadurch gekennzeichnet, dass** die zwei über die Übergangsrundung (1b‴, 8b‴) hinausverlaufenden Einkerbungskanten (6c, 6d) parallel zueinander verlaufen.

4. Fahrzeugluftreifen nach einem der Ansprüche 1 bis 3, **dadurch gekennzeichnet, dass** der Winkel (δ, θ), unter welchem die Schrägfläche (5d, 11d) am Boden (5b, 11b) der Einkerbung (5, 11) zur Umfangsrichtung orientiert ist, 65° bis 75° beträgt.

5. Fahrzeugluftreifen nach einem der Ansprüche 1 bis 4, **dadurch gekennzeichnet, dass** sich der Boden (5b, 11b) der Einkerbung (5, 11) in einer in radialer Richtung ermittelten konstanten Tiefe (t₁) von 60% bis 80% der Profiltiefe befindet.

6. Fahrzeugluftreifen nach einem der Ansprüche 1 bis 5, **dadurch gekennzeichnet, dass** die gekrümmten Kantenabschnitte (6c', 6d') der über die Übergangsrundung (1b‴, 8b" `) hinausverlaufenden Einkerbungskanten (6c, 6d), betrachtet in einer die jeweilige Einkerbungskante (6c, 6d) enthaltenden Querschnittebene, entlang eines Radius (r₃) von 1,5 mm bis 2,5 mm verlaufen.

7. Fahrzeugluftreifen nach einem der Ansprüche 1 bis 6, **dadurch gekennzeichnet, dass** die gekrümmte innere Begrenzungskante (7d) der Schrägfläche (5d, 11d), betrachtet in einer die innere Begrenzungskante (7d) enthaltenden Querschnittebene, entlang eines Radius (r₄) von 0,5 mm bis 1,0 mm verläuft.

8. Fahrzeugluftreifen nach einem der Ansprüche 1 bis 7, **dadurch gekennzeichnet, dass** die gebogene Schrägfläche (5d, 11d) eine in die Laufstreifenperipherie projizierte Breite (b_{SF}') aufweist, welche 50% bis 70%, insbesondere 53% bis 67%, einer zwischen den über die Übergangsrundung (1b‴, 8b‴) hinausverlaufenden Einkerbungskanten (6c, 6d) als Minimalabstand ermittelten Breite (b₁) der Einkerbung (5, 11) beträgt.

9. Fahrzeugluftreifen nach einem der Ansprüche 1 bis 8, **dadurch gekennzeichnet, dass** die Einkerbung (5, 11) eine zwischen den über die Übergangsrundung (1b‴, 8b‴) hinausverlaufenden Einkerbungskanten (6c, 6d) als Minimalabstand ermittelte Breite (b₁) von 4,0 mm bis 7,0 mm aufweist.

10. Fahrzeugluftreifen mit einem Laufstreifen mit einer Profilrippe (1, 8), deren Einkerbungen (5, 11) aufweisende Rippenflanke (1b, 8b) eine radial innere Übergangsrundung (1b') zum Rillengrund (3) der jeweiligen Umfangsrille (2, 9) aufweist, nach einem der Ansprüche 1 bis 9, **dadurch gekennzeichnet, dass** der Boden (5b, 11b) der Einkerbung (5, 11) an der Umfangsrille (2, 9), im Querschnitt der Umfangsrille (2, 9) betrachtet, am Niveau des radial äußeren Endes der Übergangsrundung (1b') liegt oder radial außerhalb dieses Niveaus liegt.

11. Fahrzeugluftreifen nach einem der Ansprüche 1 bis 10, **dadurch gekennzeichnet, dass** Einkerbungen (5) vorgesehen sind, welche lokale Einkerbungen (5) sind, die sich gegenüber dem radial äußeren Ende der Übergangsrundung (1b‴) der Rippenflanke (1b) in axialer Richtung höchstens 10,0 mm in die Profilrippe (1) hineinerstrecken.

12. Fahrzeugluftreifen nach Anspruch 11, **dadurch gekennzeichnet, dass** die lokalen Einkerbungen (5) in einer schulterseitigen Profilrippe (1) ausgebildet sind.

13. Fahrzeugluftreifen nach einem der Ansprüche 1 bis 12, **dadurch gekennzeichnet, dass** Einkerbungen (11) vorgesehen sind, welche Teil eines in der Profilrippe (8) ausgebildeten Einschnittes (10) oder einer in der Profilrippe ausgebildeten Rille sind, wobei die zwei über die Übergangsrundung (8b‴) hinausverlaufenden Einkerbungskanten in Fortsetzung der Rillen- bzw. Einschnittkanten verlaufen.

14. Fahrzeugluftreifen nach Anspruch 13, **dadurch gekennzeichnet, dass** die Einkerbungen (11), welche Teil eines Einschnittes (10) bzw. einer Rille sind, in einer mittleren Profilrippe (8) ausgebildet sind.

## Claims

1. Pneumatic vehicle tyre having a tread with at least one profile rib (1, 8) which is delimited at least on one side by a circumferential channel (2, 9), has a rib flank (1b, 8b) at said circumferential channel, has a rib outer side (1a) situated in the tread periphery and is provided with a multiplicity of notches (5, 11), said notches departing from the circumferential channel (2, 9), being open towards the tread periphery, being of shallower form than the circumferential channel (2, 9) and in each case having a base (5b, 11b) and, on their outer side, notch edges (6a, 6b, 6c, 6d),
**characterized**
**in that** the rib flank (1b, 8b) has a transition rounding (1b‴, 8b‴) to the rib outer side (1a) that is formed in relation to the axial direction of the rib flank, at which transition rounding the notches (5, 11) are formed, wherein in each case two notch edges (6c, 6d) of each notch (5, 11) extend beyond the transition rounding (1b‴, 8b‴), and
wherein there departs from one of these notch edges (6d) an outwardly bent convex oblique surface (5d, 11d) which extends to the base (5b, 11b) of the notch (5, 11) and which is rotated relative to the circumferential direction such that it is oriented in relation to the circumferential direction at an angle (δ, θ) of 40° to 80° at the base (5b, 11b) of the notch (5, 11).

2. Pneumatic vehicle tyre according to Claim 1, **characterized in that** the notch edges (6c, 6d) extending beyond the transition rounding (1b‴, 8b‴) have arcuately curved edge sections (6c', 6d') on the transition rounding (1b‴, 8b‴), and **in that**, in the interior of the notch (5, 11), the bent oblique surface (5d, 11d) has an inner delimitation edge (7d) which is spaced apart from the circumferential channel (2, 9) and which is arcuately curved at least over an edge section (7d'), the direction of curvature of which edge section or delimitation edge corresponds to that of the arcuately curved edge sections (6c', 6d') of the notch edges (6c, 6d) extending beyond the transition rounding (1b‴, 8b‴) and which edge section or delimitation edge has greater curvature in comparison with said edge sections (6c', 6d').

3. Pneumatic vehicle tyre according to Claim 1 or 2, **characterized in that** the two notch edges (6c, 6d) extending beyond the transition rounding (1b‴, 8b‴) extend parallel to one another.

4. Pneumatic vehicle tyre according to one of Claims 1 to 3, **characterized in that** the angle (δ, θ) at which the oblique surface (5d, 11d) is oriented in relation to the circumferential direction at the base (5b, 11b) of the notch (5, 11) is 65° to 75°.

5. Pneumatic vehicle tyre according to one of Claims 1 to 4, **characterized in that** the base (5b, 11b) of the notch (5, 11) is situated at a constant depth (t₁), determined in the radial direction, of 60% to 80% of the profile depth.

6. Pneumatic vehicle tyre according to one of Claims 1 to 5, **characterized in that** the curved edge sections (6c', 6d') of the notch edges (6c, 6d) extending beyond the transition rounding (1b‴, 8b‴), as viewed in a cross-sectional plane containing the respective notch edge (6c, 6d), extend along a radius (r₃) of 1.5 mm to 2.5 mm.

7. Pneumatic vehicle tyre according to one of Claims 1 to 6, **characterized in that** the curved inner delimitation edge (7d) of the oblique surface (5d, 11d), as viewed in a cross-sectional plane containing the inner delimitation edge (7d), extends along a radius (r₄) of 0.5 mm to 1.0 mm.

8. Pneumatic vehicle tyre according to one of Claims 1 to 7, **characterized in that** the bent oblique surface (5d, 11d) has a width (b_{SF}') projected into the tread periphery which is 50% to 70%, in particular 53% to 67%, of a width (b₁) of the notch (5, 11) that is determined as the minimum distance between the notch edges (6c, 6d) extending beyond the transition rounding (1b‴, 8b‴).

9. Pneumatic vehicle tyre according to one of Claims 1 to 8, **characterized in that** the notch (5, 11) has a width (b₁) determined as the minimum distance between the notch edges (6c, 6d) extending beyond the transition rounding (1b‴, 8b‴) of 4.0 mm to 7.0 mm.

10. Pneumatic vehicle tyre having a tread with a profile rib (1, 8), whose rib flank (1b, 8b), which has notches (5, 11), has a radially inner transition rounding (1b') to the channel base (3) of the respective circumferential channel (2, 9), according to one of Claims 1 to 9, **characterized in that** the base (5b, 11b) of the notch (5, 11), at the circumferential channel (2, 9), as viewed in the cross section of the circumferential channel (2, 9), is situated at the level of the radially outer end of the transition rounding (1b') or is situated radially outside this level.

11. Pneumatic vehicle tyre according to one of Claims 1 to 10, **characterized in that** provision is made of notches (5) which are local notches (5) which, in relation to the radially outer end of the transition rounding (1b‴) of the rib flank (1b), extend at most 10.0 mm into the profile rib (1) in the axial direction.

12. Pneumatic vehicle tyre according to Claim 11, **characterized in that** the local notches (5) are formed in a shoulder-side profile rib (1).

13. Pneumatic vehicle tyre according to one of Claims 1 to 12, **characterized in that** provision is made of notches (11) which are part of an incision (10) formed in the profile rib (8) or of a channel formed in the profile rib, wherein the two notch edges extending beyond the transition rounding (8b‴) extend as a continuation of the groove or incision edges.

14. Pneumatic vehicle tyre according to Claim 13, **characterized in that** the notches (11) which are part of an incision (10) or of a channel are formed in a central profile rib (8).

## Revendications

1. Pneumatique de véhicule comportant une bande de roulement avec au moins une nervure de profil (1, 8) délimitée au moins d'un côté par une rainure circonférentielle (2, 9), présentant sur celle-ci un flanc de nervure (1b, 8b) et un côté extérieur de nervure (1a) situé dans la périphérie de la bande de roulement, laquelle nervure de profil est munie d'une pluralité d'entailles (5, 11) partant de la rainure circonférentielle (2, 9), ouvertes vers la périphérie de la bande de roulement, moins profondes que la rainure circonférentielle (2, 9), qui présentent chacune un fond (5b, 11b) et des bords d'entaille (6a, 6b, 6c, 6d) sur leur côté extérieur,
**caractérisé en ce que**
le flanc de nervure (1b, 8b) présente, vers le côté extérieur de la nervure (1a), un arrondi de transition (1b‴, 8b‴) réalisé dans la direction axiale du flanc de nervure, sur lequel sont réalisées les entailles (5, 11), deux bords d'entaille (6c, 6d) de chaque entaille (5, 11) s'étendant respectivement au-delà de l'arrondi de transition (1b‴, 8b‴) et
de l'un de ces bords d'entaille (6d) partant une surface oblique convexe (5d, 11d) courbée vers l'extérieur, qui s'étend vers le fond (5b, 11b) de l'entaille (5, 11), laquelle se tord par rapport à la direction circonférentielle de telle sorte qu'elle est orientée au fond (5b, 11b) de l'entaille (5, 11) par rapport à la direction circonférentielle selon un angle (δ, θ) de 40° à 80°.

2. Pneumatique de véhicule selon la revendication 1, **caractérisé en ce que** les bords d'entaille (6c, 6d) s'étendant au-delà de l'arrondi de transition (1b‴, 8b‴) présentent des sections de bord (6c', 6d') incurvées en forme d'arc sur l'arrondi de transition (1b‴, 8b‴) et **en ce que** la surface oblique courbée (5d, 11d) présente, à l'intérieur de l'entaille (5, 11), une bord de délimitation intérieur (7d) espacé de la rainure circonférentielle (2, 9), incurvé en forme d'arc au moins sur une section de bord (7d'), dont la direction de courbure correspond à celle des sections de bord (6c', 6d') incurvées en forme d'arc des bords d'entaille (6c, 6d) s'étendant au-delà de l'arrondi de transition (1b‴, 8b‴) et qui est plus fortement incurvée par rapport à ces sections de bord (6c', 6d').

3. Pneumatique de véhicule selon la revendication 1 ou 2, **caractérisé en ce que** les deux bords d'entaille (6c, 6d) qui s'étendent au-delà de l'arrondi de transition (1b‴, 8b‴) sont parallèles l'un à l'autre.

4. Pneumatique de véhicule selon l'une quelconque des revendications 1 à 3, **caractérisé en ce que** l'angle (δ, θ) selon lequel la surface oblique (5d, 11d) au fond (5b, 11b) de l'entaille (5, 11) est orientée par rapport à la direction circonférentielle est de 65° à 75°.

5. Pneumatique de véhicule selon l'une quelconque des revendications 1 à 4, **caractérisé en ce que** le fond (5b, 11b) de l'entaille (5, 11) se trouve à une profondeur constante (t₁), déterminée dans la direction radiale, de 60 % à 80 % de la profondeur de profil.

6. Pneumatique de véhicule selon l'une quelconque des revendications 1 à 5, **caractérisé en ce que** les sections de bord incurvées (6c', 6d') des bords d'entaille (6c, 6d) s'étendant au-delà de l'arrondi de transition (1b‴, 8b‴), vues dans un plan de section transversale contenant le bord d'entaille respectif (6c, 6d), s'étendent le long d'un rayon (r₃) de 1,5 mm à 2,5 mm.

7. Pneumatique de véhicule selon l'une quelconque des revendications 1 à 6, **caractérisé en ce que** le bord de délimitation intérieur incurvé (7d) de la surface oblique (5d, 11d), vu dans un plan de section transversale contenant le bord de délimitation intérieur (7d), s'étend le long d'un rayon (r₄) de 0,5 mm à 1,0 mm.

8. Pneumatique de véhicule selon l'une quelconque des revendications 1 à 7, **caractérisé en ce que** la surface oblique courbée (5d, 11d) présente une largeur (b_{SF}') projetée dans la périphérie de la bande de roulement qui est de 50 % à 70 %, notamment de 53 % à 67 %, d'une largeur (b₁) de l'entaille (5, 11) déterminée comme distance minimale entre les bords d'entaille (6c, 6d) s'étendant au-delà de l'arrondi de transition (1b‴, 8b‴).

9. Pneumatique de véhicule selon l'une quelconque des revendications 1 à 8, **caractérisé en ce que** l'entaille (5, 11) présente une largeur (b₁), déterminée comme distance minimale entre les bords d'entaille (6c, 6d) s'étendant au-delà de l'arrondi de transition (1b‴, 8b‴), de 4,0 mm à 7,0 mm.

10. Pneumatique de véhicule comportant une bande de roulement avec une nervure de profil (1, 8), dont le flanc de nervure (1b, 8b) présentant des entailles (5, 11) présente un arrondi de transition (1b') radialement intérieur vers le fond de rainure (3) de la rainure circonférentielle (2, 9) respective, selon l'une quelconque des revendications 1 à 9, **caractérisé en ce que** le fond (5b, 11b) de l'entaille (5, 11) sur la rainure circonférentielle (2, 9), vu dans la section transversale de la rainure circonférentielle (2, 9), se trouve au niveau de l'extrémité radialement extérieure de l'arrondi de transition (1b') ou radialement en dehors de ce niveau.

11. Pneumatique de véhicule selon l'une quelconque des revendications 1 à 10, **caractérisé en ce que** des entailles (5) sont prévues, qui sont des entailles locales (5) qui s'étendent dans la direction axiale au plus de 10,0 mm dans la nervure de profil (1) par rapport à l'extrémité radialement extérieure de l'arrondi de transition (1b‴) du flanc de nervure (1b).

12. Pneumatique de véhicule selon la revendication 11, **caractérisé en ce que** les entailles locales (5) sont réalisées dans une nervure de profil (1) du côté de l'épaulement.

13. Pneumatique de véhicule selon l'une quelconque des revendications 1 à 12, **caractérisé en ce que** des entailles (11) sont prévues, qui font partie d'une incision (10) réalisée dans la nervure de profil (8) ou d'une rainure réalisée dans la nervure de profil, les deux bords d'entaille qui s'étendent au-delà de l'arrondi de transition (8b‴) s'étendant dans le prolongement des bords de la rainure ou de l'incision.

14. Pneumatique de véhicule selon la revendication 13, **caractérisé en ce que** les entailles (11), qui font partie d'une incision (10) ou d'une rainure, sont réalisées dans une nervure de profil centrale (8).
